# EUROPEAN PATENT SPECIFICATION

(11) **EP 2 553 304 B1**
(45) Date of publication and mention of the grant of the patent: **18.01.2017**
(21) Application number: 11712303.4
(22) Date of filing: 15.03.2011
(51) Int. Cl.: F16L 1/20, F16L 1/23

(54) **PIPELINE LAYING APPARATUS AND METHOD**
ROHRVERLEGUNGSVORRICHTUNG UND -VERFAHREN
APPAREIL ET PROCÉDÉ DE POSE DE PIPELINE

(30) Priority: 30.03.2010 GB 201005314
(43) Date of publication of application: 06.02.2013
(73) Proprietor: Technip France, 92400 Courbevoie (FR)
(72) Inventor: GILES, John, Inverurie Aberdeenshire AB51 5LT (GB)
(74) Representative: Earnshaw, Geoffrey Mark
(86) International application number: PCT/GB2011/050505
(87) International publication number: WO 2011/121329

(56) References cited:
- EP-A1- 0 302 038
- WO-A1-01/38768
- WO-A1-03/040602
- US-A- 4 802 794

## Description

The present invention relates to a marine pipeline laying aligner, a pipeline lay ramp assembly comprising such an aligner and a lay tower, and a vessel having such a lay ramp assembly, as well as to a method of laying a marine pipeline involving same.

US6371694 discloses a vessel for laying rigid tubular pipes using the 'reeled-lay method'. Generally, sections of pipe are welded together on land or onshore, and the welded pipeline, generally having an extensive length which can be up to 1 km, or beyond, is reeled onto one or more reels (which may be as much as 15 to 20m in diameter) and located on a laying vessel. Once offshore, the pipeline is unwound from the reel and passes to a lay ramp having a lay tower which includes one or more 'straighteners' designed to straighten the deformed pipeline prior to its entry into the water and its laying.

A general arrangement for this reeled-lay method is shown in the accompanying Figure 1 which corresponds to Figure 1 in US6371694. It shows a laying vessel 1 having a reel (wheel) 10 from which a pipeline 14 passes upwardly towards a large chute 7 at the top of a lay tower (davit) 3 for passage through a 3-point straightening assembly 8 and a group of two four-track-caterpillar tensioners 9, prior to passing through a central moon pool 2 for laying.

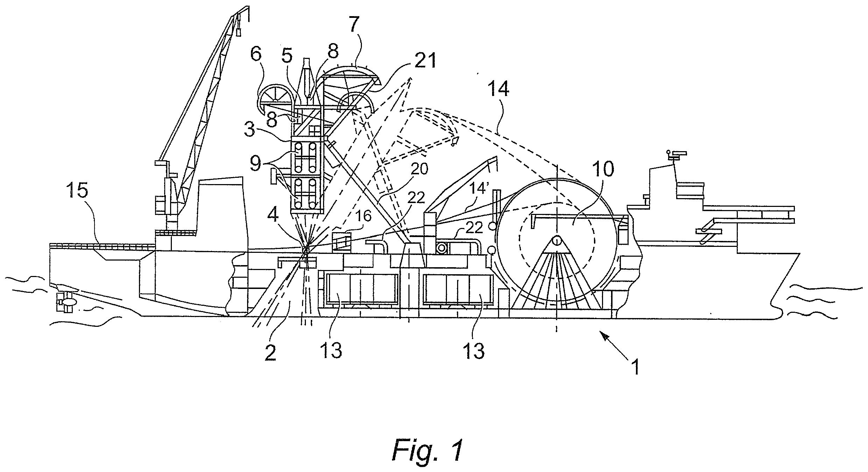

The action of the reel is driven by a motor which controls the unwinding of the pipeline from the reel. Tensioners can be provided along the vertical lay path of the lay tower, but it is appreciated that there is a significant distance between the reel on the vessel in Figure 1 herewith, and the lay tower (davit). This creates a tension, and rotation of the reel has to be adjusted with regard to this tension and the speed of the tensioners along the vertical lay path of the lay ramp. In particular, it is preferred to avoid any slack or over tension in the pipeline that would be detrimental to the integrity of the pipeline.

However, along this trajectory, the tension continuously varies because of the start up, stopping, and general inertia of the motors and reel, etc, as well as any variations in the straighteners' speed compared to the speed of the motor of the storage reel.

EP1250546 describes a pipe lay vessel including a deflection member moveable around an equilibrium position for the lengthening or shortening of its first pipe trajectory to maintain a substantially constant tension of the pipe along the first trajectory during unwinding of the reel. This is achieved by having a pipe aligner hingingly attached to a horizontal support arm and rotatable about the hinge axle dependant upon the tension force exerted on the aligner. However, the arrangement shown in EP1250546 is only rotatable about one axis, which is providing only one form of rotational compensation.
It also prevents compensation of a change in tension of the pipeline trajectory due to other reasons in practice, such as the changing unreeling position of the pipeline or the use of multiple reels in a vessel such as shown in US6371694.

Thus, it is an object of the present invention to provide an aligner with greater flexibility in practice.

Thus, according to one aspect of the present invention, there is provided a pipeline lay ramp assembly comprising a lay tower and a guide means at or near the top of the lay tower to guide a marine pipeline from a reel into and down the tower and through one or more straighteners, wherein the guide means is a marine pipeline laying aligner on a base , and the marine pipeline laying aligner comprises a moveable aligner track,
characterised in that the marine pipeline laying aligner (30) has two axles extending laterally from each side of the aligner, and a plurality of actuators extending from base points on the base to the two axles able to move the marine pipeline laying aligner and provide a moveable aligner track having at least three degrees of freedom relative to the lay tower with a large degree of both rotational and vertical displacement.

In this way, the moveable aligner track is able to assist with tension compensation for many more pipeline trajectories on a marine pipeline laying vessel than hitherto.

The present invention is useable with marine pipelines of any size, shape or design, and API 17B and 17J provide definitions of suitable flexible pipes, and API 17A provides a definition of suitable rigid pipes intended for offshore oil/gas, etc. production and transportation.

Marine pipelines include corrosion resistant pipelines for the marine or otherwise underwater transportation or conveying of corrosive fluids such as gas or crude oil, which can be provided by pipes having an internal metallic liner. A double-walled or bi-metallic pipe is generally composed of two-metallic layers; the outer layer is for resisting hydrostatic pressure, and/or internal pressure depending upon the water depth, whilst the internal layer prevents damage to the outer layer from the chemical composition of the fluid being conveyed. Such bi-metallic pipes can also be termed mechanically lined pipes (MLP), where a liner is fixed to the outer layer such as carbon steel without metallurgical bonding.

The reeled lay method of laying marine pipelines comprises forming the pipeline onshore, generally by assembly from a number of smaller pipes or pipe sections. Such pipe or pipe sections may extend themselves from several metres long to up to approximately 1 km long, or be greater than 1 km long. Methods and apparatus for joining pipes or pipe sections are well known in the art and are not described here in detail. Generally, the joining comprises one or more welds, such as tie-in welds. A number of joined pipe or pipe sections form a pipeline, which can be reeled onto a reel in one or more processes known in the art.

The aligner track may be any suitable component, device or feature able to provide a path for the marine pipeline thereover or therethrough. The aligner track generally comprises a defined path or pathway, such as a gutter or groove or line, optionally involving one or more moving components or parts.

The aligner track may include one or more wheels adapted to assist the passage of the marine pipeline therethrough or thereover. This can include multiple guidewheels along the aligner track, and/or the aligner track being a single-grooved wheel able to rotate freely or to be driven for the passage of the marine pipeline thereover.

Generally, the aligner track forms at least the uppermost portion of the laying aligner, usually its uppermost surface.

The aligner track is movable to have at least three degrees of freedom. That is, at least three different directions of movement.

Preferably, the aligner has three, four, five or six degrees of freedom, more preferably six degrees of freedom. These degrees of freedom can be based on one or more of the known Cartesian coordinates, including but not limited to regular Cartesian co-ordinates, as well as a combination of same. For example, the six degrees of freedom can equate to movement on the basis of the regular 'x, y and z' Cartesian coordinates, as well as to pitch, roll and yaw movements.

The aligner track is moveable by the use of a plurality of actuators including but not limited to linear and rotational actuators. Preferably, the number of actuators corresponds to the number of degrees of freedom of movement of the aligner track

One or more of the actuators may be co-ordinated, linked or otherwise related in motion. Preferably, the actuators can all act independently, although movement of one actuator may result in a sympathetic action by one or more other actuators.

One or more of the actuators may be the same or different to one or more other actuators, in speed, length, extension, rotation or a combination of same. The actuators may be arranged in symmetry, part symmetry or asymmetrically about the laying aligner, and may be directly or indirectly conjoined with the aligner.

Preferably, the marine pipeline laying aligner comprises six arms, each arm being a linear actuator, generally being a pneumatic or hydraulic ram and piston. The arms may have the same or different lengths, and may be arranged in symmetry, part symmetry or asymmetrically around the aligner.

According to one embodiment of the present invention, the marine pipeline laying aligner includes a stewart platform able to provide movement of the aligner track with at least three degrees of freedom, generally six degrees of freedom.

Stewart platforms are well known in the art and comprise six independently actuated legs or arms, wherein the lengths of the arms are changed to position and orientate the base of the stewart platform relative to the top of the stewart platform. Whilst a stewart platform generally comprises a single base and a single top to which each of the actuated arms are connected, the present invention is not limited to all of the actuators being connected or located on a single base, and to all of the actuators being connected to a flat or linear configuration in relation to the aligner track.

The marine pipeline laying aligner in the present invention, being moveable in at least three degrees of freedom, is able to better maintain tension in the pipeline between a marine pipeline reel and a pipeline lay ramp as discussed in more detail hereinafter, and particularly when the aligner is for use in the reeled lay method.

The marine pipeline laying aligner may be separate or otherwise distinct from other apparatus, devices or units involved in the laying of a marine pipeline.

In one embodiment of the present invention, the aligner is attached to one or more straighteners. Straighteners are known to the skilled man for use in straightening marine pipelines prior to their laying, and the skilled man is aware of various possible configurations and numbers of straighteners that can be used for various marine pipelines.

Preferably at least one attached straightener is maintained in alignment with the aligner track. The or each such straightener may be maintained in alignment with the aligner track by the use of various arrangements, preferably by the securement of such attached straightener(s) with the aligner track such that movement of the aligner track results in the same movement of the or each such attached straightener. The straightener(s) may be securely attached by the use of one or more arms, which arms are optionally moveable to maintain best alignment of the or each said straightener with the aligner track.

In this way, the present invention also provides a combined marine pipeline laying aligner as described herein and one or more straighteners as a system or single unit, optionally mounted on a lay tower as a single system or unit using a series of actuators.

A lay tower for a pipeline lay ramp assembly is known in the art, and generally comprises a tower having one or more guide means at or near its top to help first guide a marine pipeline down the tower and through one or more straighteners or straightening assemblies, and one or more tensioners.

The term 'straightening' as used herein includes one or more processes or steps of unbending the reeled or spooled marine pipeline after it leaves the reel, and generally as it is delivered to its intended laying position or location. This can include one or more bending cycles, alignments and/or straightening steps, usually before the marine pipeline enters the marine environment. It can include the use of one or more straighteners or straightening assemblies, and one or more tensioners also known in the art.

The lay tower is generally upright, but may be moveable such as that shown in Figure 1 of US6371694 and Figure 1 herewith.

Where the marine pipeline laying aligner also comprises one or more attached straighteners, the or each such straightener may be securely attached to the aligner and hingingly attached to the lay tower. Thus, the or each such straightener can be maintained in alignment with the aligner track of the aligner, whilst also being supported by the lay tower, but moveable in relation thereto. Optionally, the or each such straightener is attached to the aligner by the use of one or moveable arms, optionally being articulated.

By combining the aligner of the present invention with one or more straighteners to form a single unit, this allows the unit to keep the straightening forces (on the unreeling pipeline) separate from the internal catenary forces within the pipeline, which can become significant when trying to monitor internal catenary forces close to operating limits.

According to a further aspect of the present invention, there is provided a marine pipeline laying vessel comprising a pipeline lay ramp assembly as defined herein above. In use, the vessel would include one or more reels carrying a marine pipeline for laying, and the present invention is further described in relation to the vessel including one or more reels.

Vessels for laying marine pipelines from reels are well known in the art, and may comprise a number of other apparatus, devices or units, such as a moon pool and tensioners or clamps to assist the passage and laying of the marine pipeline. Where the marine pipeline is intended for longer or deeper depths, including but not limited to >1000m, >2000m or even >3000m, the marine pipeline laying vessel may be adapted for the carriage of two or more reels, such as shown in US6371694.

According to one embodiment of the present invention, the marine pipeline laying vessel includes a control system able to control the movement and position of the aligner track of the marine pipeline laying aligner relative to the or a reel, and usually but not limited to, also relative to the position of the lay tower.

The control system may comprise any components, units or apparatus, generally including one or more controllers and one or more speed, tension and/or position monitors, operable manually and/or automatically. Generally, the control system is also adapted to control the operation (speed) of the reel motor and/or the operation of one or more motors in the lay tower for moving the marine pipeline therealong or therethrough.

The control system is preferably able to monitor, either directly or indirectly, the tension of the marine pipeline between its storage reel and the marine pipeline laying aligner, possibly in combination with awareness of the storage reel motor speed and/or any lay tower motor operations. Where any such monitor or detector provides a signal to the control system which is above or below a certain limit or value, usually a predetermined limit or range of values, the control system can provide one or more signals to the marine pipeline laying aligner for movement of the aligner track to change its position, generally to control the tension of the marine pipeline and/or maintain the tension within defined limits or range, between the reel and the lay tower.

Such signals can be to activate one or more actuators to move the aligner track in one or more of its degrees of freedom.

The control system described above can also be fitted with one or more linear and/or force feedback systems or assemblies, able to best ensure that a compensating force is applied to the marine pipeline to maintain 'back-pipe' tension in the marine pipeline between the reel and the lay tower. In addition, the laying aligner of the present invention could also be configured as an overload protection device for the lay ramp.

Thus, according to another aspect of the present invention, there is provided a method of reel-laying a marine pipeline from a marine pipeline laying vessel as defined hereinabove comprising at least the steps of:
(a) passing the marine pipeline from a reel towards a pipeline lay ramp assembly;
(b) passing the marine pipeline across the track of a marine pipeline laying aligner as defined hereinabove;
(c) passing the marine pipeline from the marine pipeline laying aligner to a lay tower; and
(d) adjusting the position of marine pipeline laying aligner relative to the lay tower to maintain the tension in the marine pipeline between the reel and the lay tower.

Preferably, the method of the present invention comprises moving the aligner according to a control system monitoring the tension in the marine pipeline between the reel and the lay tower.

Preferably, the method further comprises actuating one or more actuators to adjust the position of the aligner in step (d).

The method may further comprise a step of passing the marine pipeline from the marine pipeline laying aligner through one or more straighteners attached to the aligner. As discussed above, this allows separation of the pipeline straightening forces from the internal catenary forces within the pipeline.

In particular, the present invention is able to provide an aligner track with significant freedom for rotation and/or vertical displacement compared to any known aligner. This not only assists maintaining the required tension in the pipeline during laying, but also allows the marine pipeline laying aligner of the present invention to more directly aligned with the direction of the marine pipeline from the reel, which direction changes as the marine pipeline unwinds from the reel like any spooled or wound hose.

The laying aligner of the present invention can provide such movement both in three axes of rotation, as well as translational movement if required. In particular, the laying aligner of the present invention can be tilted into the plane of the aligner bend, which avoids 'out-of-plane' loading of the marine pipeline onto the laying aligner and/or lay tower.

Embodiments of the present invention will now be described by way of example only and with reference to the accompanying drawings in which:
Fig. 1 is a side view of a prior art vessel;
Fig. 2 is a perspective view of a marine pipeline laying aligner according to one embodiment of the present invention;
Fig. 3 is a schematic side view of a marine pipeline laying vessel according to another embodiment of the present invention;
Fig. 4 is a perspective view of a stewart platform useable with the present invention;
Figures 5a and 5b are side and perspective views of a marine pipeline laying aligner and two attached straighteners as a single unit according to another embodiment; and
Figure 6 is a perspective diagrammatic view of the aligner and straightener combination of Figures 5a and 5b, the top of a lay tower, and a pipeline reel.

Referring to the drawings, Figure 1 shows laying vessel 1 having a moon pool 2, a laying davit 3 which rises to some 50m, and a large arched chute 7 for deflecting a rigid pipe through the laying davit 3. Figure 1 also shows a 3-point straightening assembly 8 and a group of caterpillar tensioners 9 in the davit 3. In Figure 1, a pipe is located on a large vertical wheel 10 formed of a hub measuring about 20m in diameter, and of cheeks about 31 m in diameter, for a width of slightly more than 5m, such dimensions being by way of example only. The numeral 14 shows the path of the pipe from a wheel 10 being unwound and passing over the large chute 7 and then into the straightening assembly 8 and into the tensioners 9, after which it passes through the moon pool 2 for laying.

The invention of US6371694 provides an inclinable laying davit for supporting the pipe to be laid in a direction to avoid lateral plastic deformation, as well as being able to accommodate two storage wheels. However, this requires a davit base of significant strength to achieve its inclinable nature, with limited freedom of movement of the large chute.

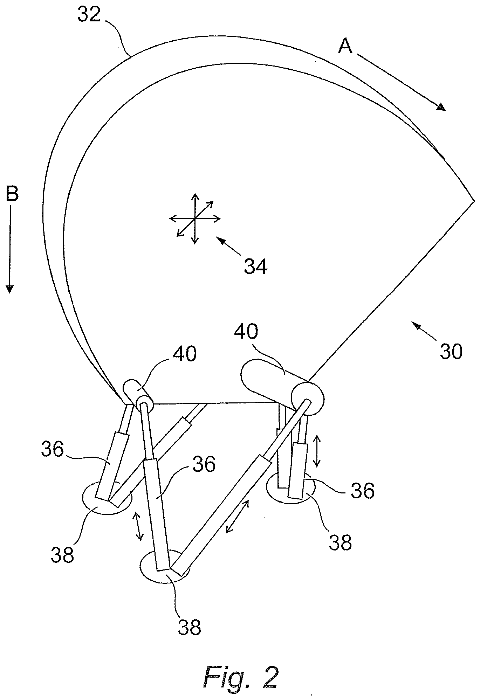

Figure 2 herewith shows a marine pipeline laying aligner 30 according to the present invention having a moveable aligner track 32 having a least three degrees of freedom, generally represented by the arrows 34.

The aligner 30 is moveable in six degrees of freedom 34 by the use of 6 independent linear actuators 36. The linear actuators 36 are preferably grouped into three groups of two or two groups of three, depending upon the view taken. The base or proximal ends of two actuators 36 have a common base point or node 38, although the invention is not limited to this requirement or arrangement.

Each linear actuator 36 has a distal end connected to the aligner 30, preferably to one of two axles 40 extending laterally from each side of the aligner 30. The axles 40 may be the same or different, and may be planer with relation to a plane of the aligner, or non-planer.

The distal ends of the linear actuators 36 may be connected in alignment to the axles 40, or in non-alignment. The skilled man is aware of the possible variations in connection with the positioning of a number of actuators either being in symmetry, part symmetry or asymmetric, to provide relevant degrees of freedom of movement.

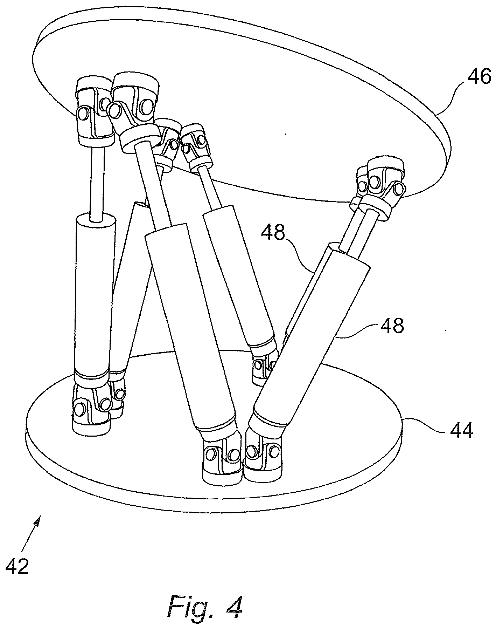

In this regard, Figure 4 shows a stewart platform 42 known in the art, and having a base 44, top plate 46, and six symmetric linear actuators 48 thereinbetween, generally comprising three groups of two actuators, the groups being different at the base 44 and the top plate 46. This provides six independent actuated legs or arms, where the lengths of the legs can be changed to position and orientate the top plate 46 relative to the base 44 (or vice versa) in a manner known in the art to provide six degrees of freedom.

Returning to Figure 2, the location of the linear actuators 36 and their different actuating lengths, as well as their connection to axles 40, allow the actuators 36 to move the aligner track 32 relative to the base points 38, not only with six degrees of freedom, but also with a large degree of both rotational and vertical displacement; and in particular being out of a regular Cartesian alignment with the base points 38. Such out of alignment may be also defined as 'out-of-plane'.

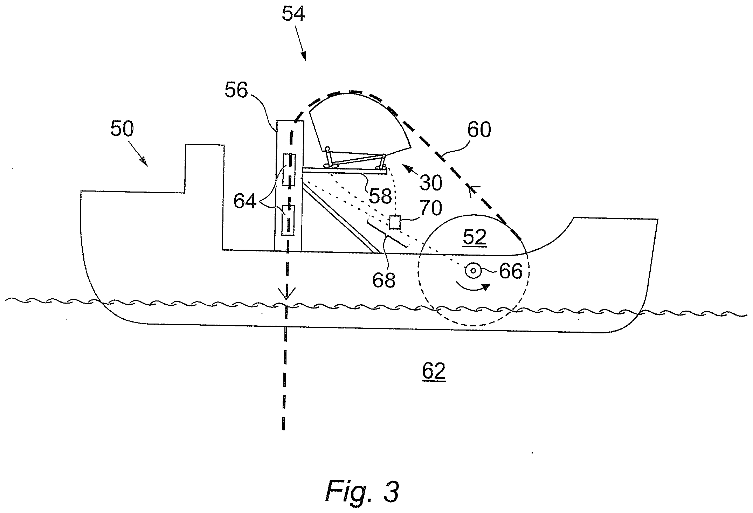

Figure 3 shows a schematic side view of a marine pipeline laying vessel 50 according to an embodiment of the present invention, comprising a reel 52 and a pipeline lay ramp assembly 54. The ramp assembly 54 comprises a lay tower 56 and a marine pipeline laying aligner 30. The laying aligner 30 shown in Figure 3 is exaggerated in size compared to the other features in Figure 3 for illustration purposes only. The laying aligner 30 is located on a base 58 on which the base points 38 of the linear actuators 36 can be secured.

Thus, the movement of the aligner track 32 of the laying aligner 30 is relative to the lay tower 56, and also relative to the reel 52 which is generally also fixed to the vessel 50 in use, other than being rotatable to unwind or unspool its marine pipeline.

Figure 3 also shows in dashed line 60 the path of a marine pipeline 60 being unspooled from the storage reel 52 for passage along the aligner track 32 of the aligner 30 and down through the lay tower 56 for subsequent entering and laying in the marine environment 62. Thus, Figure 2 also shows directions from the aligner track 32 along arrow A to a storage reel such as the reel 52 shown in Figure 3, and along arrow B to a lay tower and tensioners and the like, such as the lay tower 56 and its tensioners 64 as shown in Figure 3.

In use, the storage reel 52 has a spooled marine pipeline 60 thereon for laying in a marine environment. Where the laying is at a depth >2000m or even >3000m, the size and weight of the marine pipeline 60 will be appreciated by a skilled person, such that the size of the storage reel 52 is also significant, in particular having a significant width and change in diameter during the unspooling process.

Meanwhile, it is known that during the straightening of the pipeline 60 through the lay tower 56, (generally through the use of one or more straighteners and the use of one or tensioners 64), the speed of one or more motors in the lay tower 56, such as those operating the tensioners 64, may need to vary or may be varied because of the operations of the apparatus and units in the lay tower 56, especially the straighteners.

Even small variations in one or more of the above parameters makes a significant difference to the tension in the marine pipeline 60 between the reel 52 and the lay tower 56, especially when considering the distance or span between the reel 52 and the lay tower 56, and the weight of the marine pipeline, as well as the inertia of the whole procedure, in particular the rotational inertia of the reel 52 which can weigh hundreds or thousands of tons along with the spooled marine pipeline thereon.

Thus, whilst there can be some consideration of the relative speeds of the reel motor 66 (shown diagrammatically in Figure 3 acting on the reel axle), simultaneously trying to adjust the speeds of the reel 52 and the marine pipeline 60 through the lay tower 56 often leads to an overtension or to slack in the pipeline between the reel 52 and the lay tower 56 which can be detrimental to the integrity of the pipeline.

Tension-compensation systems are known to provide in or on the lay tower 56, generally by the force and/or position of tensioners 64. However, such systems cannot totally compensate for undesired tension in the marine pipeline to between the reel 52 and the lay tower 56, in particular the change of alignment of the marine pipeline 60 as it is unspooled with a changing lateral position from the reel 52.

The marine pipeline laying aligner 30 of the present invention is able to provide six degrees of freedom through operation of the linear actuators 36. The actuators can be fitted any additional structure other than the linear actuators 36. This allows for a large magnitude of either rotational and/or vertical displacement of the aligner track 32 relative to the lay tower 56 and the reel 52. This provides significantly better efficiency in maintaining and controlling the desired tension in the marine pipeline between the reel 52 and the lay tower 56 by simple and rapid operation of the linear actuators 36.

Figure 3 also shows a control system 68 generally comprising a central controller 70 and wired or wireless paths to the operators of the reel motor 66, the motors of the tensioners 64, and operators of the linear actuators 36. The means, apparatus, devices or units required to activate the linear actuators 36 are not shown in the Figures but are well known to the skilled man, such as being pneumatic and/or hydraulic devices operating from signals from the control system 68.

In this way, the control system 68 can be aware of the different inputs from the different motors, and/or from a marine pipeline tension detector (not shown), so as to control the movements of the linear actuators 36 and hence the position of the aligner track 32 of the aligner 30 so as to best compensate for any changes in the tension of the marine pipeline 60 between the reel 52 and the lay tower 56.

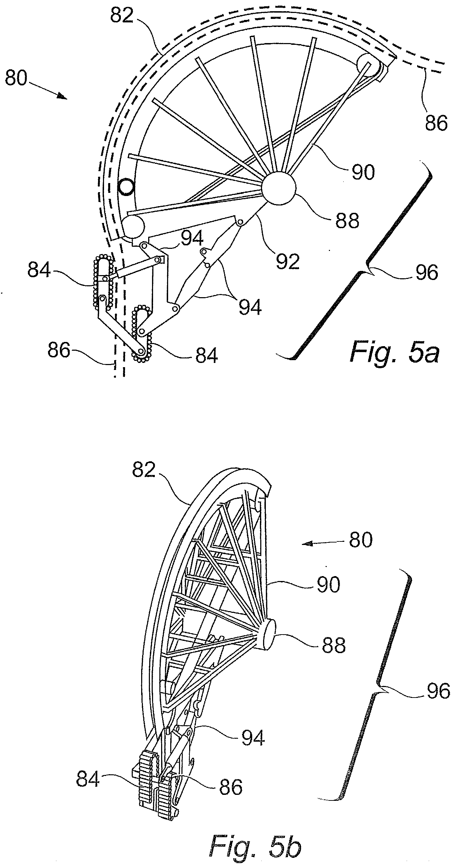

Figures 5a and 5b show a second marine pipeline laying aligner 80 having a moveable aligner track 82 having at least three degrees of freedom as discussed hereinafter.

Attached to the second aligner 80 are two straighteners 84 being either part of or all of the straightener assembly required for a marine pipeline laying. Each straightener 84 generally comprises an elongate tracked outer surface, and the two straighteners 84 are arranged to be offset and to act on opposite sides of a marine pipeline 86 (shown in dash line of Figure 5a) so as to straighten the unreeling marine pipeline 86 in a manner known in the art.

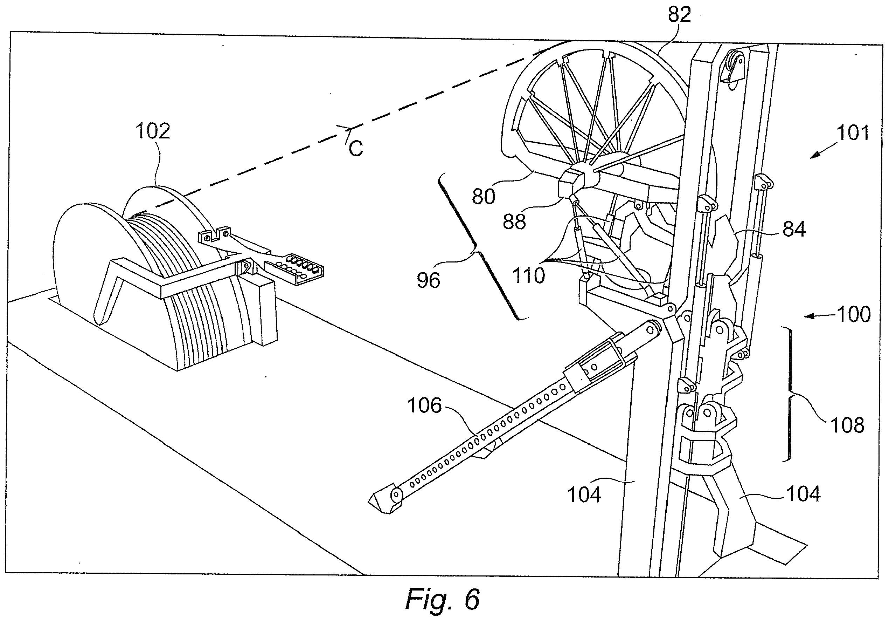

Figures 5a and 5b show the second aligner 80 being based on a central large axle 88 from which a series of support spokes 90 extend to support the aligner track 82. Figures 5a and 5b do not shown actuators able to move the aligner track 82; these are shown in Figure 6 hereinafter.

Figures 5a and 5b show an arrangement between a base arm 92 of the second aligner 80 and the straighteners 84, the arrangement comprising a series of interconnected arms 94 being hingingly connected so as to allow some degree of movement of the straighteners 84 relative to the second aligner 80 (and indeed relative to each other). However, the hinging connections of the arms 94 are only within the same plane as the plane of the aligner track 82. In this way, the straighteners 84 can be maintained in alignment with the aligner track 82 of the second aligner 80, whilst the straighteners 84 are secured to the second aligner 80 to form a single unit 96.

Figure 6 shows the second aligner 80 and straighteners 84 combination as a single unit 96 in conjunction with a second lay tower 100. Such a lay tower 100 and unit 96 provide a second pipeline lay ramp assembly 101 according to another embodiment. A marine pipeline laying vessel according to another embodiment could comprise a pipeline lay ramp assembly 101 as shown in Figure 6, usually in combination with one or more pipeline reels 102 as also shown in Figure 6.

Figure 6 also shows the path of an unreeling pipeline along arrow C from a pipeline reel 102 to the ramp assembly 101 as discussed hereinafter.

Figure 6 shows the lay tower 100 in schematic form, generally comprising at least two main upright frame members 104, supported by a two angled supports 106 having adjustable lengths, so as to alter the angle of the lay tower 100 relative to its usual vertical axis in a manner as discussed hereinabove.

Figure 6 shows the single unit 96 comprising the second aligner 80 and the attached straighteners 84 located above a second tensioner assembly 108, generally comprising two tensioning clamps adapted to be moveable relative to each other so as to maintain tension in the unreeling pipeline as it is being laid below the vessel in a manner known in the art.

Figure 6 also shows the large axle 88 and the plurality of second linear actuators 110 grouped in a manner similar to the linear actuators 36 shown in Figure 2, such that they are grouped in a manner of three groups of two or two groups of three, depending upon the view taken. As discussed above in relation to the linear actuators 36, the location of the second actuators 110 shown in Figure 6, generally having different actuating lengths, as well as their connection to different bases or nodes on the lay tower 100, allow the actuators 110 to move the aligner track 82 relative to the bases and the lay tower 100, not only with six degrees of freedom, but also with a large degree of both rotational and vertical displacement.

Movement of the second actuators 110 shown in Figure 6 also causes movement of the straighteners 84 such that the straighteners 84 maintain alignment with the aligner track 82 in the same plane. This allows the straightening forces to keep acting on the unreeling pipeline (based on the second aligner 80 and the straighteners 84) separate from the internal catenary forces also acting on the pipeline. Thus, in particular, when the second aligner 80 is moved in response to a tension measurement in the pipeline, the straighteners 84 move accordingly as they are attached and fixed to the second aligner 80.

The straighteners 84 are preferably also directly connected to the lay tower 100, preferably using one or more moveable arms able to provide support to the straighteners 84 directly from the lay tower 100, without affecting the ability of the straighteners 84 to move in alignment with the aligner track 82.

The arrangement shown in Figure 6 shows a method reel-laying a marine pipeline from a reel 102 towards the aligner track 82 of the second aligner 80 and then through or between two straighteners 84 attached to the second aligner 80 prior to passing through the remainder sections of the lay tower 100, such as the tensioner 108, whilst allowing adjustment of the position of the second aligner 80 relative to the lay tower 100 to maintain tension in the marine pipeline between the reel 102 and the lay tower 100.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiments.

## Claims

1. A pipeline lay ramp assembly (54) comprising a lay tower (56) and a guide means at or near the top of the lay tower to guide a marine pipeline (60) from a reel (52) into and down the tower and through one or more straighteners, wherein the guide means is a marine pipeline laying aligner (30) on a base (58), and the marine pipeline laying aligner comprises a moveable aligner track (32),
**characterised in that** the marine pipeline laying aligner (30) has two axles (40) extending laterally from each side of the aligner, and a plurality of actuators (36) extending from base points (38) on the base to the two axles able to move the marine pipeline laying aligner and provide a moveable aligner track (32) having at least three degrees of freedom (34) relative to the lay tower with a large degree of both rotational and vertical displacement.

2. An assembly as claimed in claim 1 wherein the aligner has 3, 4, 5 or 6 degrees of freedom.

3. An assembly as claimed in claim 2 wherein the aligner has 6 degrees of freedom.

4. An assembly as claimed in any one of the preceding claims wherein the number of actuators corresponds to the number of degrees of freedom.

5. An assembly as claimed in claim 4 wherein one or more of the actuators are linear actuators (36).

6. An assembly as claimed in claim 5 wherein all of the actuators are linear actuators (36).

7. An assembly as claimed in any one of the preceding claims including a stewart platform (42).

8. An assembly as claimed in any one of the preceding claims for use in the reeled lay method and able to maintain tension in the pipeline between a marine pipeline reel and a pipeline lay ramp.

9. An assembly as claimed in any one of the preceding claims wherein the aligner has and one or more attached straighteners (84).

10. An assembly as claimed in claim 9 wherein at least one attached straightener is maintained in alignment with the aligner track.

11. A pipeline lay ramp assembly as claimed in claim 10 wherein the or each straightener is securely attached to the aligner and hingingly attached to the lay tower.

12. A marine pipeline laying vessel (50) comprising a pipeline lay ramp assembly (54) as defined in any one of claims 1 to 11.

13. A vessel as claimed in claim 12 further comprising a control system (68) able to control the movement and position of the aligner track (32) relative to a reel (52).

14. A vessel as claimed in claim 13 wherein the control system (68) is also able to control the movement and position of the aligner track (32) relative to the position of the lay tower (56).

15. A method of reel-laying a marine pipeline (60) from a marine pipeline laying vessel (50) as defined in any one claims 12 to 14 comprising at least the steps of:
(a) passing the marine pipeline from the reel towards the pipeline lay ramp assembly (54);
(b) passing the marine pipeline across the track (32) of the marine pipeline laying aligner;
(c) passing the marine pipeline from the marine pipeline laying aligner to the lay tower (56); and
(d) adjusting the position of marine pipeline laying aligner relative to the lay tower to maintain the tension in the marine pipeline between the reel and the lay tower.

16. A method as claimed in claim 15, comprising moving the aligner according to a control system (68) monitoring the tension in the marine pipeline between the reel and the lay tower.

17. A method as claimed in claim 15 or claim 16 comprising actuating one or more actuators (36) to adjust the position of the aligner in step (d).

18. A method as claimed in any one of claims 15 to 17 further comprising the step of passing the marine pipeline from the marine pipeline laying aligner through one or more straighteners (84) attached to the aligner.

## Patentansprüche

1. Eine Pipelineverlegungsrampenanordnung (54), beinhaltend einen Verlegungsturm (56) und ein Leitmittel an oder nahe dem Oberteil des Verlegungsturms, um eine Untermeerespipeline (60) von einer Rolle (52) in den Turm und in diesem hinunter und durch eine oder mehrere Richteinrichtungen zu leiten, wobei das Leitmittel eine Untermeerespipelineverlegungsausrichteeinrichtung (30) auf einer Basis (58) ist und die Untermeerespipelineverlegungsausrichteeinrichtung eine bewegliche Ausrichtespur (32) beinhaltet,
**dadurch gekennzeichnet, dass** die Untermeerespipelineverlegungsausrichteeinrichtung (30) zwei Achsen (40), die sich lateral von jeder Seite der Ausrichteeinrichtung erstrecken, und eine Vielzahl von Betätigungselementen (36), die sich von Basispunkten (38) auf der Basis zu den beiden Achsen erstrecken, die die Untermeerespipelineverlegungsausrichteeinrichtung bewegen können und eine bewegliche Ausrichtespur (32) mit mindestens drei Freiheitsgraden (34) relativ zu dem Verlegungsturm mit einem großen Grad an sowohl Rotations- als auch Vertikalversatz bereitstellen, aufweist.

2. Anordnung gemäß Anspruch 1, wobei die Ausrichteeinrichtung 3, 4, 5 oder 6 Freiheitsgrade aufweist.

3. Anordnung gemäß Anspruch 2, wobei die Ausrichteeinrichtung 6 Freiheitsgrade aufweist.

4. Anordnung gemäß einem der vorhergehenden Ansprüche, wobei die Anzahl an Betätigungselementen der Anzahl an Freiheitsgraden entspricht.

5. Anordnung gemäß Anspruch 4, wobei eines oder mehrere der Betätigungselemente lineare Betätigungselemente (36) sind.

6. Anordnung gemäß Anspruch 5, wobei alle der Betätigungselemente lineare Betätigungselemente (36) sind.

7. Anordnung gemäß einem der vorhergehenden Ansprüche, umfassend eine Stewart-Plattform (42).

8. Anordnung gemäß einem der vorhergehenden Ansprüche zur Verwendung in dem Reel-Lay-Verfahren und die in der Lage ist, Spannung in der Pipeline zwischen einer Untermeerespipelinerolle und einer Pipelineverlegungsrampe zu halten.

9. Anordnung gemäß einem der vorhergehenden Ansprüche, wobei die Ausrichteeinrichtung eine oder mehrere angebrachte Richteinrichtungen (84) aufweist.

10. Anordnung gemäß Anspruch 9, wobei mindestens eine angebrachte Richteinrichtung nach der Ausrichtespur ausgerichtet gehalten wird.

11. Pipelineverlegungsrampenanordnung gemäß Anspruch 10, wobei die oder jede Richteinrichtung sicher an der Ausrichteeinrichtung angebracht und gelenkig an dem Verlegungsturm angebracht ist.

12. Ein Untermeerespipelineverlegungswasserfahrzeug (50), das eine wie in einem der Ansprüche 1 bis 11 definierte Pipelineverlegungsrampenanordnung (54) beinhaltet.

13. Wasserfahrzeug gemäß Anspruch 12, das ferner ein Steuersystem (68) beinhaltet, das in der Lage ist, die Bewegung und Position der Ausrichtespur (32) relativ zu einer Rolle (52) zu steuern.

14. Wasserfahrzeug gemäß Anspruch 13, wobei das Steuersystem (68) auch in der Lage ist, die Bewegung und Position der Ausrichtespur (32) relativ zu der Position des Verlegungsturms (56) zu steuern.

15. Ein Verfahren zum Rollverlegen einer Untermeerespipeline (60) von einem wie in einem der Ansprüche 12 bis 14 definierten Untermeerespipelineverlegungswasserfahrzeug (50), das mindestens die folgenden Schritte beinhaltet:
(a) Führen der Untermeerespipeline von der Rolle zu der Pipelineverlegungsrampenanordnung (54) hin;
(b) Führen der Untermeerespipeline über die Spur (32) der Untermeerespipelineverlegungsausrichteeinrichtung;
(c) Führen der Untermeerespipeline von der Untermeerespipelineverlegungsausrichteeinrichtung zu dem Verlegungsturm (56); und
(d) Einstellen der Position der Untermeerespipelineverlegungsausrichteeinrichtung relativ zu dem Verlegungsturm, um die Spannung in der Untermeerespipeline zwischen der Rolle und dem Verlegungsturm zu halten.

16. Verfahren gemäß Anspruch 15, beinhaltend das Bewegen der Ausrichteeinrichtung gemäß einem Steuersystem (68), das die Spannung in der Untermeerespipeline zwischen der Rolle und dem Verlegungsturm überwacht.

17. Verfahren gemäß Anspruch 15 oder Anspruch 16, beinhaltend das Betätigen eines oder mehrerer Betätigungselemente (36), um die Position der Ausrichteeinrichtung in Schritt (d) einzustellen.

18. Verfahren gemäß einem der Ansprüche 15 bis 17, ferner beinhaltend den Schritt des Führens der Untermeerespipeline von der Untermeerespipelineverlegungsausrichteeinrichtung durch eine oder mehrere an der Ausrichteeinrichtung angebrachte Richteinrichtungen (84).

## Revendications

1. Un ensemble formant rampe de pose de pipeline (54) comprenant une tour de pose (56) et un moyen formant guide au sommet ou près du sommet de la tour de pose afin de guider un pipeline marin (60) depuis un touret (52) jusque dans la tour, vers le bas de celle-ci et à travers un ou plusieurs redresseurs, dans lequel le moyen formant guide est un aligneur de pose de pipeline marin (30) sur une base (58), et l'aligneur de pose de pipeline marin comprend une piste d'aligneur mobile (32),
**caractérisé en ce que** l'aligneur de pose de pipeline marin (30) présente deux arbres (40) s'étendant latéralement depuis chaque côté de l'aligneur, et une pluralité d'actionneurs (36) s'étendant depuis des points de base (38) sur la base jusqu'aux deux arbres capables de mouvoir l'aligneur de pose de pipeline marin et de fournir une piste d'aligneur mobile (32) présentant au moins trois degrés de liberté (34) relativement à la tour de pose avec un grand degré de déplacement à la fois rotationnel et vertical.

2. Un ensemble tel que revendiqué dans la revendication 1 dans lequel l'aligneur présente 3, 4, 5 ou 6 degrés de liberté.

3. Un ensemble tel que revendiqué dans la revendication 2 dans lequel l'aligneur présente 6 degrés de liberté.

4. Un ensemble tel que revendiqué dans l'une quelconque des revendications précédentes dans lequel le nombre d'actionneurs correspond au nombre de degrés de liberté.

5. Un ensemble tel que revendiqué dans la revendication 4 dans lequel un ou plusieurs des actionneurs sont des actionneurs linéaires (36).

6. Un ensemble tel que revendiqué dans la revendication 5 dans lequel l'ensemble des actionneurs sont des actionneurs linéaires (36).

7. Un ensemble tel que revendiqué dans l'une quelconque des revendications précédentes incluant une plate-forme de Stewart (42).

8. Un ensemble tel que revendiqué dans l'une quelconque des revendications précédentes pour son utilisation dans la méthode de pose en déroulé (« reeled lay method ») et capable de maintenir une tension dans le pipeline entre un touret de pipeline marin et une rampe de pose de pipeline.

9. Un ensemble tel que revendiqué dans l'une quelconque des revendications précédentes dans lequel l'aligneur présente un ou plusieurs redresseurs attachés (84).

10. Un ensemble tel que revendiqué dans la revendication 9 dans lequel au moins un redresseur attaché est maintenu en alignement avec la piste d'aligneur.

11. Un ensemble formant rampe de pose de pipeline tel que revendiqué dans la revendication 10 dans lequel le ou chaque redresseur est attaché de manière solidaire à l'aligneur et attaché de manière articulée à la tour de pose.

12. Un navire de pose de pipeline marin (50) comprenant un ensemble formant rampe de pose de pipeline (54) tel que défini dans l'une quelconque des revendications 1 à 11.

13. Un navire tel que revendiqué dans la revendication 12 comprenant en sus un système de contrôle (68) capable de contrôler le mouvement et la position de la piste d'aligneur (32) relativement à un touret (52).

14. Un navire tel que revendiqué dans la revendication 13 dans lequel le système de contrôle (68) est aussi capable de contrôler le mouvement et la position de la piste d'aligneur (32) relativement à la position de la tour de pose (56).

15. Une méthode de pose en touret d'un pipeline marin (60) depuis un navire de pose de pipeline marin (50) tel que défini dans l'une quelconque des revendications 12 à 14 comprenant au moins les étapes consistant :
(a) à faire passer le pipeline marin du touret vers l'ensemble formant rampe de pose de pipeline (54) ;
(b) à faire passer le pipeline marin d'un côté à l'autre de la piste (32) de l'aligneur de pose de pipeline marin ;
(c) à faire passer le pipeline marin de l'aligneur de pose de pipeline marin à la tour de pose (56) ; et
(d) à ajuster la position de l'aligneur de pose de pipeline marin relativement à la tour de pose afin de maintenir la tension dans le pipeline marin entre le touret et la tour de pose.

16. Une méthode telle que revendiquée dans la revendication 15, comprenant le fait de mouvoir l'aligneur selon un système de contrôle (68) surveillant la tension dans le pipeline marin entre le touret et la tour de pose.

17. Une méthode telle que revendiquée dans la revendication 15 ou la revendication 16 comprenant le fait d'actionner un ou plusieurs actionneurs (36) afin d'ajuster la position de l'aligneur à l'étape (d).

18. Une méthode telle que revendiquée dans l'une quelconque des revendications 15 à 17 comprenant en sus l'étape consistant à faire passer le pipeline marin de l'aligneur de pose de pipeline marin à travers un ou plusieurs redresseurs (84) attachés à l'aligneur.
